(19) Europäisches Patentamt
European Patent Office
Office européen des brevets

(11) **EP 2 151 034 B1**

(12) # EUROPEAN PATENT SPECIFICATION

(45) Date of publication and mention
of the grant of the patent:
**02.11.2011 Bulletin 2011/44**

(51) Int Cl.:
***H02J 3/38*** (2006.01)

(21) Application number: **08736820.5**

(22) Date of filing: **09.04.2008**

(86) International application number:
**PCT/FI2008/050171**

(87) International publication number:
**WO 2008/145807 (04.12.2008 Gazette 2008/49)**

(54) **REGULATION SYSTEM**

REGULIERUNGSSYSTEM

SYSTÈME DE RÉGULATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **30.05.2007 FI 20075388**

(43) Date of publication of application:
**10.02.2010 Bulletin 2010/06**

(73) Proprietor: **Wärtsilä Finland Oy
65380 Vaasa (FI)**

(72) Inventor: **RIIHIMÄKI, Vesa
FI-65320 Vaasa (FI)**

(74) Representative: **Gustafsson, Aulis Valdemar et al
AWEK Industrial Patents Ltd Oy
P.O. Box 230
00101 Helsinki (FI)**

(56) References cited:
**EP-A- 0 570 976        WO-A-03/073190
WO-A-2006/126003    US-A1- 2002 125 871**

## Description

Field of invention

The present invention relates to a regulation system for controlling a unit to be regulated, such as a generator. The invention relates especially to a regulation system for controlling a unit to be connected in parallel. The unit to be connected in parallel is, for example, a generator that can be connected to an electric power transmission network.

Background art

Electric power is produced by means of generators connected to the electric power transmission network. The transmission network transmits the produced electric power to consumers, such as electric motors, lighting equipment and the like. There is no economic way of storing electric power whereby the produced electric power must be consumed as it is produced. In other words, the amount of consumed energy must match that of produced energy.

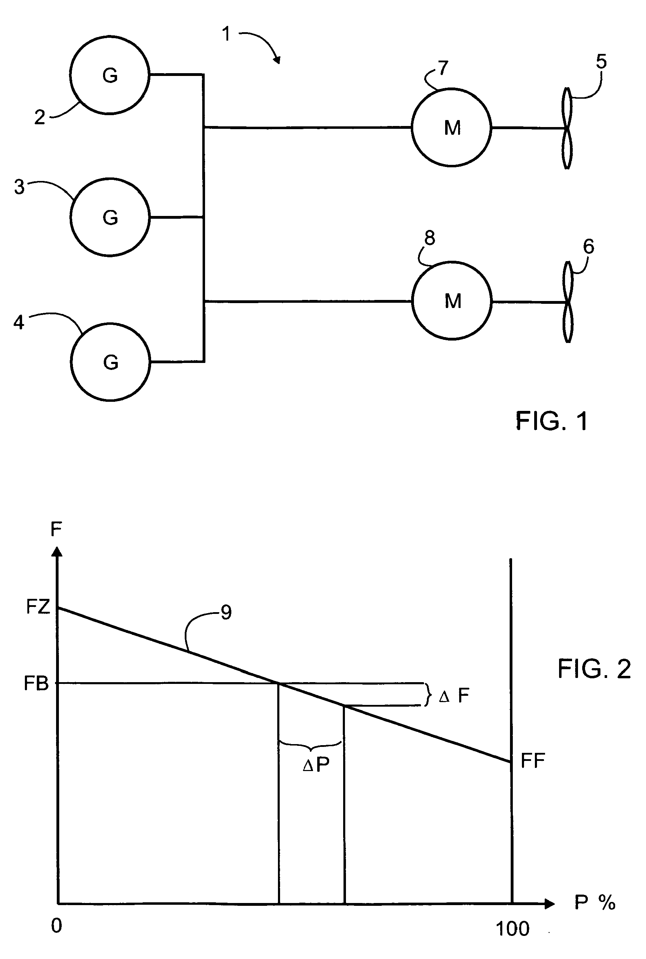

Figure 1 shows an example of a small electric power transmission network 1, an electric network of a ship, in which the generators 2, 3, 4 are connected to the network for transmitting electric energy to the engines 7, 8 of the ship. The engines of the ship turn the propellers 5, 6 of the ship. The figure shows that the generators connected to the network of the ship are connected parallel with each other and the mutually share the production of the energy requirement of the electric network. The power requirement of the electric network constantly changes so the power output must also constantly change so as to match the requirement.

In order to be able to share the necessary power output in a changing environment the regulation systems of the generators must be able to control the generators so that the generators are not competing against each other. If, for example, the energy consumption of the network increases, each generator must only produce a part of the increase of energy consumption, not try to produce the whole increase on its own (unless this has specifically been specified). This applies to all electricity power transmission networks, large and small.

It is known to use a so-called droop regulation for distributing the energy production requirement between units running in parallel. Figure 2 illustrates the principle of droop regulation. Each generator of the network has its dedicated droop regulation line 9 on the basis of which the generator modifies its power output. The horizontal axis illustrates the produced power P and the vertical axis illustrates the frequency F of the electrical network. FB is the basic frequency on which the network operates. FZ is the network frequency on which the generator doesn't produce power. FF is the network frequency on which the generator produces full power. When the load of the network increases, the frequency of the network tends to decrease. Increase of load requires an increase in energy output. Figure 2 illustrates an exemplary situation in which the increase of load in the network has decreased the frequency of the network by ΔF. In the example of the figure the change of frequency ΔF changes the power output of the generator by ΔP.

In practice, the main regulation circuit of the generator tends to change the power output to correspond with the changed load situation. The droop regulation circuit changes the reference frequency used by the control towards the direction of the droop, whereby the main regulation circuits of the generators connected in parallel do not compete with each other. Formula (1) describes the power change of the regulation system

$$\Delta P = -\frac{\Delta f_{ss}}{R_u} \qquad\qquad (1)$$

in which ΔP is power change, $\Delta f_{ss}$ is frequency change in relation to the frequency of the permanent state and $R_u$ is the droop regulation unit of the generator. The droop regulation unit is determined as follows:

$$R = \frac{FZ - FF}{FB} * 100 \qquad\qquad (2)$$

in which FZ, FF and Fb are values shown in figure 2.

Document US 2002/0125871 discloses a known regulation system having a controller that utilises the droop regulation.

A problem with droop regulation is, however, that changing the reference value used by the regulation system in the direction of the droop reduces the response of the regulation, which can be seen in, e.g. slower operation of the regulation.

Brief description of the invention

The aim of the invention is to decrease the reduction of the response of the regulation system caused by the droop regulation. The aim is achieved as described in the main claim. The dependent claims describe the various embodiments of the invention. In a regulation system according to the invention a negative derivate signal is formed from the droop adjustment signal. The negative derivate signal is connected to the droop adjustment signal and the combined signal is used for changing the reference signal used by the main regulator.

List of figures

In the following the invention is described in more detail by reference to the figures in the drawing, in which

Figure 1     illustrates an example of the electricity network of a ship,

Figure 2     illustrates an example of the operation of the droop regulation and

Figure 3     illustrates an example of the regulation system according to the invention.

Description of the invention

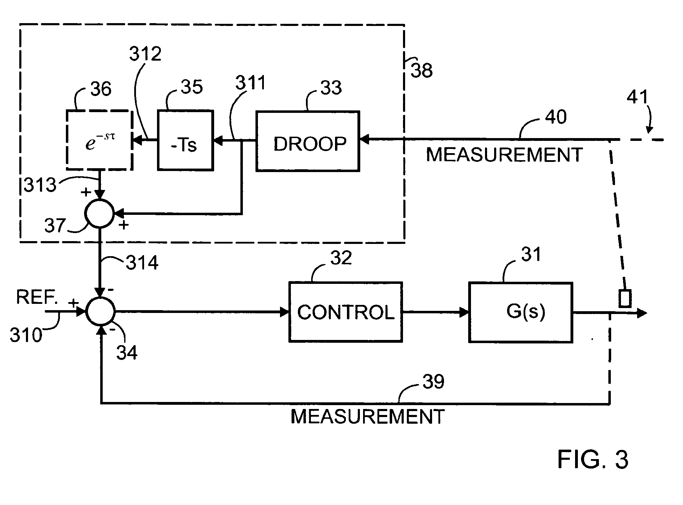

Figure 3 illustrates an example of the regulation system according to the invention. The main regulator 32 of the regulation system controls the unit 31 to be regulated as response for the difference between the measurement signal 39 and the reference signal 310. The unit to be regulated can be, for example, a generator connected to the electric network. The measurement signal 39 can thus be a frequency measured from the electricity network or a generator / motor speed measurement from the flywheel. The reference signal can be, for example, the nominal frequency of the network (usually 50 Hz in Europe) or the reference value of speed.

The regulation system also comprises a droop regulation unit 33 for forming a droop regulation signal 311 for changing the reference signal used by the main regulator towards the subtraction of the measurement signal 39 and the reference signal 310. The droop regulation unit uses a second measurement signal 40. The second measurement signal describes the power resulting from, for example, the currents and voltages of the generator, the torque measurement of the shaft or fuel injection 41. As is described above, the droop control unit attempts to distribute the load between the units running in parallel. The droop regulation unit, however, reduces the response of the regulation system. In order to improve the response, the regulation system according to the invention also comprises a derivation apparatus 35 for forming a negative derivate signal 312 from the droop regulation signal 311 and an addition apparatus 37 for combining the said derivate signal 312 and the droop regulation signal 311. This combined signal 314 is arranged to change the reference signal used by the main regulator 32.

The negative derivate signal reduces the effect of the droop regulation signal to the reference signal used by the main regulator, i.e. it improves the response of the regulation system. It, however, maintains the meaning of the droop regulation signal, i.e. it makes it possible to distribute load between units running in parallel. Depending on the properties of the unit 31 to be controlled and the regulation system it can be preferable for the regulation system to also comprise a delay apparatus 36 for forming a delay to the said derivate signal 312. The optional delay apparatus 36 is marked with dashed lines in figure 2. The derivate signal 313 delayed as described above and the droop regulation signal 311 are combined, the combined signal 314 being arranged to change the reference signal of the main adjuster 32. By a suitable setting of the delay the effect of the negative derivate (subtraction) can be made to better fit the properties of the main regulator and the unit to be regulated.

In the embodiment of figure 3 the effect of the measurement signal 39 and the combined signal 314 on the reference signal 310 is formed in a subtraction apparatus 34. The subtraction apparatus can be a separate circuit or a unit integrated to another part of the regulation system, such as the main regulator 32. The measurement signal 39 and the combined signal 314 change the value of the reference signal in the same direction (they increase or decrease the value of the reference signal).

The embodiment according to the invention can be formed in a number of ways. The said apparatuses (subtraction apparatus 34, derivation apparatus 35, delay apparatus 36 and the addition apparatus 37) and the droop regulation apparatus can be separate electronic circuits. The said apparatuses and the droop regulation unit 33 can also be program units arranged to be executed in the processor unit. The said apparatuses and the droop regulation unit 33 can also be integrated into one unit 38. In figure 2 the larger area, limited by dashed lines, describes one way of integrating the apparatuses and the droop regulation unit into one unit. The integrated unit can be accomplished by means of an ASIC circuit (Application Specific Integrated Circuit).

The main regulator can be, for example, a PI regulator, but also other regulator types can be used in case they are usable. The regulation system can be carried out with analogue technology or digital technology or as a combination of these techniques.

As can be seen, the embodiment according to the invention can be carried out by means of a number of solutions. Thus, it will be apparent that the invention is not limited to the examples mentioned in this text.

Thus, any inventive embodiment can be carried out within the scope of the invention.

## Claims

1. A regulation system comprising a main regulator (32) for controlling the unit (31) to be regulated as a response to the difference between a measurement signal (39) and a reference signal (310) and a droop regulator unit (33) for forming a droop regulation signal (311) for changing the reference signal which reference signal (310) is entered into a subtraction apparatus (34) that outputs the difference between the reference and the measurement signal (39), the droop regulation unit (33) being arranged to use a second measurement signal (40) **characterized in that**, the regulation system additionally comprises a derivation apparatus (35) for forming a negative derivate signal (312) from the droop regulation signal (311) as well as an addition apparatus (37) for cocombining the negative derivate signal (312) and the droop regulation signal (311), for outputting a combined signal (314) the combined signal (314) being arranged to change the reference signal used by the main regulator.

2. A system according to claim 1, **characterized in that** it additionally comprises a delay apparatus (36) for forming a delay to the said negative derivate signal (312).

3. A system according to claim 1 or 2, **characterized in that** it comprises a subtraction apparatus (34) arranged so that the measurement signal (39) and the combined signal (314) change the value of the reference signal in the same direction for changing the reference signal of the main regulator.

4. A system according to claim 3, **characterized in that** the said apparatuses (34, 35, 36, 37) and the droop regulation unit (33) are separate electronic circuits.

5. A system according to claim 3, **characterized in that** the said apparatuses (34, 35, 36, 37) and the droop regulation unit (33) are program units arranged to be executed in the processor unit.

6. A system according to claim 3, **characterized in that** the said apparatuses (34, 35, 36, 37) and the droop regulation unit (33) are integrated into one unit (38).

7. A system according to claim 6, **characterized in that** the said apparatuses are an ASIC circuit.

8. A system according to any of claims 1 - 7, **characterized in that** the main regulator (32) is a PI regulator.

9. A system according to any of claims 1 - 8, **characterized in that** the measurement signal (39) represents speed and the second measurement signal (40) represents power.

## Patentansprüche

1. Regelsystem, umfassend einen Hauptregler (32) zum Regeln der zu regelnden Einheit (31) in Abhängigkeit von der Differenz zwischen einem Messsignal (39) und einem Referenzsignal (310) und eine Statikreglereinheit (33) zum Bilden eines Statikregelsignals (311) zum Ändern des Referenzsignals, wobei das Referenzsignal (310) in eine Subtraktionsvorrichtung (34) eingegeben wird, welche die Differenz zwischen dem Referenz- und dem Messsignal (39) ausgibt, wobei die Statikregeleinheit (33) ausgebildet ist, um ein zweites Messsignal (40) zu verwenden, **dadurch gekennzeichnet, dass** das Regelsystem ferner eine Ableitungsvorrichtung (35) zum Bilden eines negativen Ableitungssignals (312) aus dem Statikregelsignal (311) sowie eine Additionsvorrichtung (37) zum Verknüpfen des negativen Ableitungssignals (312) und des Statikregelsignals (311) zum Ausgeben eines verknüpften Signals (314) umfasst, wobei das verknüpfte Signal (314) ausgebildet ist, um das Referenzsignal, das von dem Hauptregler verwendet wird, zu ändern.

2. System nach Anspruch 1, **dadurch gekennzeichnet, dass** dieses ferner eine Verzögerungsvorrichtung (36) zum Bilden einer Verzögerung für das negative Ableitungssignal (312) umfasst.

**3.** System nach Anspruch 1 oder 2, **dadurch gekennzeichnet, dass** dieses eine Subtraktionsvorrichtung (34) umfasst, die derart ausgebildet ist, dass das Messsignal (39) und das verknüpfte Signal (314) zum Ändern des Referenzsignals des Hauptreglers den Wert des Referenzsignals in dieselbe Richtung ändern.

**4.** System nach Anspruch 3, **dadurch gekennzeichnet, dass** die Vorrichtungen (34, 35, 36, 37) und die Statikregeleinheit (33) getrennte elektronische Schaltungen sind.

**5.** System nach Anspruch 3, **dadurch gekennzeichnet, dass** die Vorrichtungen (34, 35, 36, 37) und die Statikregeleinheit (33) Programmeinheiten sind, die ausgebildet sind, um in der Prozessoreinheit ausgeführt zu werden.

**6.** System nach Anspruch 3, **dadurch gekennzeichnet, dass** die Vorrichtungen (34, 35, 36, 37) und die Statikregeleinheit (33) zu einer Einheit (38) integriert sind.

**7.** System nach Anspruch 6, **dadurch gekennzeichnet, dass** die Vorrichtungen eine ASIC-Schaltung sind.

**8.** System nach einem beliebigen der Ansprüche 1-7, **dadurch gekennzeichnet, dass** der Hauptregler (32) ein PI-Regler ist.

**9.** System nach einem beliebigen der Ansprüche 1-8, **dadurch gekennzeichnet, dass** das Messsignal (39) Drehzahl darstellt und das zweite Messsignal (40) Leistung darstellt.


**Revendications**

**1.** Système de régulation comprenant un régulateur principal (32) pour commander l'unité (31) à réguler en réponse à la différence entre un signal de mesure (39) et un signal de référence (310) et une unité de régulation d'affaissement (33) pour former un signal de régulation d'affaissement (311) pour modifier un signal de référence, lequel signal de référence (310) est saisi dans un appareil de soustraction (34) qui sort la différence entre le signal de référence et le signal de mesure (39), l'unité de régulation d'affaissement (33) étant agencée pour utiliser un second signal de mesure (40), **caractérisé en ce que** le système de régulation comprend en outre un appareil de dérivation (35) pour former un signal dérivé négatif (312) depuis le signal de régulation d'affaissement (311) ainsi qu'un appareil d'addition (37) pour combiner le signal dérivé négatif (312) et le signal de régulation d'affaissement (311) pour sortir un signal combiné (314), le signal combiné (314) étant agencé pour modifier le signal de référence utilisé par le régulateur principal.

**2.** Système selon la revendication 1, **caractérisé en ce qu'**il comprend en outre un appareil de délai d'attente (36) pour former un délai d'attente vers ledit signal dérivé négatif (312).

**3.** Système selon la revendication 1 ou 2, **caractérisé en ce qu'**il comprend un appareil de soustraction (34) agencé de manière à ce que le signal de mesure (39) et le signal combiné (314) modifient la valeur du signal de référence dans la même direction pour modifier le signal de référence du régulateur principal.

**4.** Système selon la revendication 3, **caractérisé en ce que** lesdits appareils (34, 35, 36, 37) et l'unité de régulation d'affaissement (33) sont des circuits électroniques séparés.

**5.** Système selon la revendication 3, **caractérisé en ce que** lesdits appareils (34, 35, 36, 37) et l'unité de régulation d'affaissement (33) sont des unités de programme agencées pour être exécutées dans l'unité de processeur.

**6.** Système selon la revendication 3, **caractérisé en ce que** lesdits appareils (34, 35, 36, 37) et l'unité de régulation d'affaissement (33) sont intégrés en une unité (38).

**7.** Système selon la revendication 6, **caractérisé en ce que** lesdits appareils sont un circuit ASIC.

**8.** Système selon l'une des revendications 1 à 7, **caractérisé en ce que** le régulateur principal (32) est un régulateur PI.

**9.** Système selon l'une des revendications 1 à 8, **caractérisé en ce que** le signal de mesure (39) représente la vitesse et le second signal de mesure (40) représente la puissance.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020125871 A